# EUROPEAN PATENT APPLICATION

(11) **EP 4 818 117 A1**
(43) Date of publication of application: **07.10.2026**
(21) Application number: 25382318.1
(22) Date of filing: 31.03.2025
(51) Int. Cl.: C01B 32/00, C01B 32/30, C01B 32/312, C01B 32/318, C01B 32/324, C01B 32/342, C01B 32/39, C10L 9/08

(54) **METHOD AND INSTALLATION FOR OBTAINING CUSTOMIZED CARBONACEOUS MATERIALS BY MEANS OF KINETIC HEATING AND CARBONACEOUS MATERIAL OBTAINED**

(71) Applicant: Empirical Advances S.L., 28020 Madrid Madrid (ES)
(72) Inventor: ÁLVAREZ GÓMEZ, Ainhoa, 28049 Cantoblanco (Madrid) (ES); MARTÍN LORENZO, Angélica, 28049 Cantoblanco (Madrid) (ES)
(74) Representative: Hoffmann Eitle

(57) **Abstract**

Method and installation for obtaining customized advanced carbonaceous materials by means of kinetic heating, and carbonaceous material obtained in two main stages but in several consecutive steps from the kinetic heating of biomass residues in a hydrothermal carbonisation (HTC) station until obtaining an intermediate product called hydrochar, mixing said hydrochar product in a milling station together with chemical agents, and introducing and performing pyrolysis on said mixture obtained in a pyrolysis station until obtaining a carbonaceous material with advanced properties.

## Description

### TECHNICAL FIELD

The present invention relates to the field of chemical engineering, specifically to the sector of materials science.

The present invention relates to a method and installation for obtaining customized advanced carbonaceous materials and carbonaceous material obtained through said method and installation which is performed in two main stages but in several consecutive steps. The carbonaceous material is obtained by means of pyrolysis by kinetic heating (by the accelerated motion of ions or dipoles under an electromagnetic field) from an intermediate product referred to as hydrochar which, in turn, is obtained by means of hydrothermal carbonisation (hereinafter, HTC) of biomass residues of agri-food origin which, in turn, by means of kinetic heating also, reduces the necessary temperature conditions, saving energy and time in obtaining said customized advanced carbonaceous materials, whose properties and physicochemical, texture and structural characteristics can be used in several industrial sectors.

### BACKGROUND ART

Carbonaceous materials have sparked a great interest in various fields and applications, particularly in electrochemical energy storage systems, such as batteries and supercapacitors, as well as the adsorption of gases such as H₂ or CO₂, or the remediation of waters and soil.

Currently, these carbonaceous materials are used in batteries to improve their performance and prolong their service life. In particular, they are used in lithium-ion batteries, which are widely used in portable electronic devices, electric vehicles and energy storage systems.

One of the main applications of carbonaceous materials in lithium-ion batteries is in the negative electrode, also known as the anode. The anode is indeed the electrode where lithium ions insert (during charging) and extract (during discharging) throughout the charge-discharge cycles of the battery.

The carbonaceous compound used in the anode of lithium-ion batteries has the ability to adsorb and desorb lithium ions efficiently, which improves the energy storage capacity of the battery and its overall performance.

Another application for carbonaceous materials of this type is as the main active electrode material in electric double layer supercapacitors (EDLC) that operate by storing charges on the surfaces of the active material. In these devices, carbonaceous materials with very high surface areas facilitate the formation of an electric double layer, providing high energy density and a long service life.

Additionally, due to their high surface area, controlled porosity and active functional groups, carbonaceous materials of this type have excelled in various hydrogen (H₂) adsorption applications due to their ability to adsorb large quantities of gas at low pressures and moderate temperatures. The high affinity of these materials for polar molecules such as CO₂, combined with their thermal stability, makes them promising options for CO₂ capture and release cyclic processes, such as in direct air capture (DAC) or in the mitigation of industrial emissions.

The production of carbonaceous materials has traditionally been carried out by means of direct pyrolysis at about 1,200°C (In the present application, a period is used as the decimal separator, and a comma, is used as the thousands separator). For example, the number twelve thousand three hundred forty-five point sixty-seven is represented as 12,345.67). This process uses conventional methods for the pyrolysis process, such as gas-fired furnaces, which consume large volumes of gas, requiring a high energy expenditure to obtain the temperature conditions necessary for obtaining materials of this type.

In recent years, hydrothermal carbonisation (hereinafter, HTC) has proven to be a promising and more sustainable alternative to traditional direct pyrolysis, being a step prior to pyrolysis, reducing the energy expenditure of the process, thereby also making it possible to control the structure of the carbonaceous materials obtained.

The HTC process typically operates at lower carbonisation temperatures (180-260°C) which allows for a reduction in the energy resources needed as compared to thermal processes by means of pyrolysis, this further being a much faster process for obtaining intermediate products that will be used for the subsequent pyrolysis process.

Until now, first of all, hydrothermal carbonisation processes have been carried out in pressure reactors, which start from biomass, water and a small quantity of chemical agents or catalysts in some cases applying an increase in temperature that causes an increase in autogenous pressure, carrying out the degradation or transformation of the biomass components and being converted into a hydrochar, which must subsequently be chemically activated in a later step.

Hydrothermal carbonisation (HTC) processes are carried out in the presence of an aqueous medium (usually water or acidic water), generating short-chain carboxylic acids such as acetic acid (CH₃COOH) and formic acid (HCOOH), among other substances, as reaction intermediates, making the carbonisation process intrinsically autocatalytic.

Additionally, the incorporation of other types of acids or chemical agents that can modify the transformation routes during carbonisation, favouring an increase in the degradation of the components of biomass waste (cellulose, hemicellulose and lignin), resulting in an acceleration of the HTC process at lower temperatures and/or shorter reaction times.

Furthermore, the use of other types of chemical agents or acid catalysts in HTC processes not only optimises the efficiency of the process but also allows the introduction of heteroatoms or functional groups in the carbon matrix, which can modify its physical and chemical properties.

For HTC processes, the reactors must be built with materials capable of withstanding high pressures and temperatures, as well as corrosion by hot water. Typically, heating is carried out by means of heating jacket systems or coils that use heat transfer fluids.

Moreover, in pyrolysis processes of hydrochars from HTC, a carbonaceous material with high porosity can be obtained. This step requires the hydrochar, typically in aqueous solution, to be mixed with chemical agents and the subsequent drying of a mixture until a paste with a low moisture content is obtained. The subsequent pyrolysis treatment is carried out in gas furnaces at a temperature of 700-1,200°C.

Document US2023323225A1 describes a method for controlling the production of gas during the hydrothermal carbonisation (HTC) of biomass, emphasising the control of production by means of adjusting the temperature, residence time and quantity of catalyst, as well as other parameters.

Additionally, it mentions the use of heat transfer fluids such as water or oil to provide the necessary heat and cause the reaction of the biomass in the reactor. However, the drawback that exists is the prolonged time to achieve optimal temperature and pressure conditions, or the energy expenditure necessary to compensate for that time to reach high temperature and pressure.

Document EP3578512A1 describes a method of hydrothermal carbonisation using microwaves as a heat source for heating the biomass and obtaining hydrochar, however, this document is silent in connection to a further pyrolysisstep for producing the end product. In addition, this method has the drawback that the use of microwaves in the reactor proposed by the invention described in EP3578512A1 may generate hot and cold areas inside the reactor because it uses catalysts of transition metals, giving rise to a non-uniform heating of the biomass and, therefore, a higher energy expenditure.

Moreover, the use of metals such as silicates, as mentioned in the document, gives rise to a loss of service life of the reactor and, accordingly, an increase in shutdown times in a process requiring the lowest possible energy loss.

### SUMMARY OF THE INVENTION

The present invention relates to a method and installation for obtaining customized advanced carbonaceous materials and carbonaceous material obtained through said method and installation which is performed in two main stages but in several consecutive steps. The carbonaceous material is obtained by means of pyrolysis by kinetic heating (by the accelerated motion of ions or dipoles under an electromagnetic field) from an intermediate product referred to as hydrochar which, in turn, is obtained by means of hydrothermal carbonisation (hereinafter, HTC) of biomass residues of agri-food origin which, in turn, by means of kinetic heating also, reduces the necessary temperature conditions, saving energy and time in obtaining said customized advanced carbonaceous materials, whose properties and physicochemical, texture and structural characteristics can be used in several industrial sectors.

### DESCRIPTION OF THE EMBODIMENTS OF THE INVENTION

The process for obtaining customized advanced carbonaceous materials of the present invention, intends to solve the drawbacks considered above by means of applying heat through the use of kinetic heating (by the accelerated motion of ions or dipoles under an electromagnetic field), such as furnaces assisted by microwaves, where waves are provided for generating heat continuously or in pulses, by gas or electric furnaces, or by a combination of both.

The process for obtaining advanced carbonaceous materials of the present invention, intends to solve the drawbacks considered above by means of using microwave assisted heating where the waves can be provided continuously, in pulses or by a combination of both. This type of heating induced by the use of microwaves will be referred as "kinetic heating" throughout the entire document.

As used herein, "Microwave-assisted heating" shall be understood as a combination of heat transfer through ionic conduction/convection and polar rotation of polar molecules. This results in a faster heating than conventional type.

As used herein, "carbonaceous materials" shall be understood as the porous carbon material obtained by pyrolysis, which is the final product. Porous carbon materials, such as activated carbons, are characterized by high porosity with specific surface area values exceeding 1000 m²/g. They are available in granular, pellet, or fine powder form. Their chemical composition typically includes more than 95% of carbon. These characteristics provide high thermal and chemical stability, among others.

As used herein, "advanced carbonaceous materials" shall be understood as carbonaceous materials with remarkable properties and specifically designed to enhance their adsorption and electrochemical performance. These characteristics include specific surface area values far superior to those of typical carbonaceous materials (> 2,500 m²/g), hierarchical porosity with varying percentages of mesopores and micropores, and a heteroatom content of oxygen, nitrogen, and sulfur that varies and exceeds 3% by weight. The porosity and composition of these materials can be adjusted or customized by varying the process parameters to suit application specifications.

As used herein, "customized advanced carbonaceous materials" shall be understood as highly porous carbon materials with variable physicochemical and textural characteristics depending on the application. This allows the heteroatom content, primarily nitrogen and oxygen, and the average pore size to be tailored to each application, including adsorption and electrochemical energy storage, specifically supercapacitors and batteries. For example, different electrolytes can be used in supercapacitors, such as ionic liquids, salts, acids, and bases, and each of them has a different size. Customized advanced carbonaceous materials have been designed by varying the proportion of chemical agents. 1:1:1 proportion (K₂CO₃:urea:hydrochar) leads to an average pore size of 2 nm, and a 2:1:1 proportion (K₂CO₃:urea:hydrochar) leads an average pore size of 4 nm. Furthermore, variations in HTC process parameters, such as the addition of a catalyst (NH₄Cl, H₂SO₄, citric acid) and/or carbonization temperature, have also been shown to influence the proportion of micropores and the nitrogen and oxygen content.

As used herein, "hydrochar" shall be understood as is a solid, carbon-rich material produced from biomass residues through the hydrothermal carbonization (HTC) process. This thermochemical conversion method involves subjecting biomass residues-comprising organic feedstock mixed with water or solvents, and optionally chemical additives-to elevated temperatures (generally 180-260 °C) and pressure within a closed system. The resulting hydrochar typically exhibits improved properties compared to raw biomass, including increased carbon content, enhanced energy density, improved porosity, and higher chemical stability. Hydrochar can be applied in various fields, such as agriculture (soil amendments), environmental remediation (adsorption materials), energy production (biofuel), and as precursors for activated carbon production.

In this sense, the process for obtaining advanced carbonaceous materials of the present invention comprises a step of hydrothermal carbonisation (HTC) for obtaining a hydrochar from biomass feedstock or residues, water and/or solvent, and optionally chemical agents.

As used herein, "chemical agents" shall be understood as compounds or substances that can cause chemical reactions or changes on the final product. These agents can be pure chemical substances or mixtures and may act as catalysts, oxidants, reducers, bases, or acids. Chemical agents are utilized in various applications due to their ability to interact with other compounds and produce desired chemical transformations.

It is noted that common raw materials for producing hydrochars through hydrothermal carbonization include agricultural residues (rice straw, wheat straw, corn stover, sugarcane bagasse, rice husks, coconut shells, peanut shells, fruit peels, fruit pomace, garlic peels, wine lees, brewers spent grain, olive waste), forestry residues (sawdust, wood chips, bark, logging residues, pine needles), animal wastes (poultry manure, cow manure, pig manure, fish processing waste), and aquatic biomass (microalgae, macroalgae, water hyacinth, duckweed). Additionally, industrial and municipal organic wastes such as brewery residues, coffee grounds, tea waste, paper sludge, textile sludge, food waste, garden and yard waste, municipal sewage sludge, as well as dedicated energy crops like switchgrass, Miscanthus, bamboo, elephant grass, willow, and poplar, serve as important raw materials. The selection of these feedstocks depends largely on local availability, biomass composition, desired hydrochar properties, and the intended application of the produced material.

The production of hydrochars primarily involves the use of water or solvents, optionally along with chemical agents, depending on specific production objectives. Typically, distilled or deionized water is most commonly employed as the reaction medium in hydrothermal carbonization (HTC). The water-to-biomass ratio usually ranges from about 5:1 to 50:1 (w/w), preferably from about 5:1 to 20:1 (w/w), depending on the feedstock type and desired hydrochar characteristics. Occasionally, other solvents or solvent mixtures such as ethanol-water or acetone-water blends can be used to alter product properties, increase carbon yield, or enhance functional group distribution on hydrochar surfaces.

Optional chemical additives or catalysts might include mineral or organic acids (acetic acid, citric acid, sulfuric acid, hydrochloric acid, phosphoric acid), alkalis (sodium hydroxide, potassium hydroxide), salts (sodium chloride, potassium chloride), metal ions (iron, zinc, nickel salts), or oxidizing agents (hydrogen peroxide). Typical quantities for acidic or basic catalysts range from about 1-10% by mass relative to the biomass. These chemical agents significantly influence the hydrochar's structural properties, surface area, porosity, functional group availability, and adsorption capacities, thus affecting their potential application.

The specific quantity of water or solvent generally ranges from about 5 to 50 times, preferably from about 5 to 20 times, the mass of dry biomass feedstock (5:1-50:1 w/w) or preferably (5:1-20:1 w/w). Distilled or deionized water is most common, but sometimes ethanol-water or acetone-water mixtures are employed to optimize carbon yield or improve hydrochar quality. Optional chemical additives, when used, typically include acids (e.g., sulfuric or citric acid), bases (e.g., sodium hydroxide), or metal salts, at concentrations ranging approximately from 1% to 10% by weight of the biomass feedstock. These agents help to enhance reaction kinetics, adjust the pH, influence surface characteristics, and modify functional groups of the resulting hydrochar.

Throughout this context, the combined materials-biomass feedstock, water (or solvents), and any optional chemical additives-will collectively be referred to as "Hydrochar feedstock mixture". This terminology encompasses all qualitative and quantitative aspects, including diverse biomass types (e.g., agricultural, forestry, animal, aquatic, industrial, municipal), the specified range of water or solvent ratios (typically 5:1-20:1 w/w relative to dry biomass), and optional chemical agents (acids, bases, or salts) used at concentrations typically between 1-10% by weight of biomass feedstock.

More specifically, in the process for obtaining carbonaceous materials of the present invention, the step of hydrothermal carbonisation (HTC) is carried out in at least a first reactor made of advanced plastic material, said material being either polytetrafluoroethylene (hereinafter, PTFE) reinforced with polyetheretherketone (hereinafter, PEEK), preferably with the first reactor having a capacity of at least 35, 40 or 100 millilitres; wherein the HTC is carried out inside the reactor by exposing the hydrochar feedstock mixture to microwaves for a time of at least 5 minutes at a temperature of between 180°C and 260°C, wherein the microwaves are preferably emitted by a first heat transfer element in the reactor, such as a first reactor or furnace heated by convection and conduction heat transfer mechanics or by microwave irradiation heat.

The hydrochar feedstock mixture is thus subjected to hydrothermal carbonisation to provide an intermediate product referred to as hydrochar.

As used herein, the term "heated by convection" shall be referred to as a phenomenon where the heat is transmitted in a liquid or gas as a result of the movement of heated particles within it.

"Conduction heating "shall be referred to the transfer of heat from a solid towards another solid in contact with the first element.

As used herein, the term "microwave irradiation heat or heating" shall be referred to as a heating mechanism based on the use of electromagnetic radiation as the primary heating source. In this mechanism, the waves produced penetrate the solid, generating heat through a combination of ionic conduction and polar rotation of polar molecules.

As used herein, the term "microwaves" shall be referred to as electromagnetic waves with wavelengths ranging from 1 millimeter to 1 meter and frequencies between 300 MHz and 300 GHz. These waves are utilized in various applications, including telecommunications, medical treatments, and cooking. In household appliances, such as microwave reactors, microwaves operate at a frequency of approximately 2.45 GHz, causing water molecules in food to vibrate and generate heat.

The resulting hydrochar is then preferably or optionally separated from the solution and dried in a drying oven to remove moisture, preferably, but not limited to, at 105°C between 1-24 hours to remove said moisture.

Subsequently, the process comprises a step of performing chemical activation of the "hydrochar" obtained. Chemical activation of hydrochar involves treating the carbonaceous material, produced from hydrothermal carbonization (HTC) of the hydrochar feedstock mixture as described above, with chemical activating agents to enhance its porosity, surface area, and adsorption capacity. The process begins by thoroughly mixing the hydrochar with an activating chemical, such as potassium hydroxide (KOH), phosphoric acid (H₃PO₄), or zinc chloride (ZnCl₂), usually at a predetermined impregnation ratio. For example, this involves the mixing of the hydrochar with the chemical agents by means of mechanical synthesis in a milling station, which may incorporate a planetary ball mill, mixing a proportion of at least 1:1:1, i.e., one example would be at least 1 gram of hydrochar with at least 1 gram of K₂CO₃ and with at least 1 gram of urea for a time of at least 5 minutes at room temperature, where this combination is non-limiting with respect to other combinations.

The resulting chemically activated hydrochar exhibits enhanced surface characteristics, such as a high surface area, increased pore volume, and an improved functional group distribution, making it particularly suitable for applications in adsorption, environmental remediation, catalysis, and energy storage systems.

Finally, the mixture resulting from the activation stage is incorporated inside another refractory material reactor, where a pyrolysis stage is carried out using a second heat transfer element. This element is a second furnace in which heating can be induced by convection and conduction and/or microwave-assisted irradiation heat. In the last case, the second heat transferred element would consist of a cavity composed of a suction material, such as silicon carbide, which allows the adsorption of microwaves, causing very rapid heating and transmitting this heat with a conduction/convection/microwave irradiation mix to the material to be pyrolyzed.

The pyrolysis step is carried out with a heating ramp of at least 20°C/min, keeping said mixture for a period of at least 5 minutes under a constant flow of inert gases such as nitrogen or argon, among others, at least 150 cm³/min, to create an inert atmosphere inside the second reactor, until achieving temperatures of at least 800°C.

An end product is thereby achieved, being an advanced carbonaceous material (from hereinafter advanced carbonaceous material of the present invention) with a specific surface area equal to or greater than 2,500 m²/g, with pore hierarchical structures, including micro- (<2 nm) and mesopores (between 2-50 nm), with micropore areas equal to or greater than 1,000 m²/g. Likewise, the end product has a CO₂ adsorption capacity up to 4.7 mmol of CO₂ (measured at 298K). Additionally, it incorporates around 3 wt% of nitrogen, mainly in the form of pyridinic and pyrrolic, which are electrochemically active functional groups.

This end product is achieved by carrying out a process that requires considerably less time and temperatures than those required in the prior art, which represents considerable energy savings as one of the advantages of the process.

Furthermore, another advantage of the process is that, since conventional furnaces are used, the product is produced under complete industrial electrification conditions, so the fossil fuel savings are greater than in conventional furnaces used in processes of the prior art, where said energy can be obtained by means of renewable energy sources.

Furthermore, the process may preferably further comprise a step of grinding the biomass residues, prior to the step of performing hydrothermal carbonisation (HTC) depending on the composition and structure of the biomass residue used.

Therefore, the first aspect of the invention refers to a method for obtaining advanced carbonaceous materials, wherein the method comprises the steps of:
- introducing in a first reactor (2) comprised in a hydrothermal carbonisation station (1), a hydrochar feedstock mixture (3); wherein the first reactor (2) is made of advanced plastic material, said material being PEEK and/or PTFE,
- carrying out a hydrothermal carbonisation of the hydrochar feedstock mixture (3) by kinetically heating (microwave assisted heating) the first reactor (2) until obtaining hydrochar (5); preferably wherein the microwave assisted heating (kinetic heating) of the first reactor (2) is carried out by means of a first heat transfer element (4) that is comprised in the hydrothermal carbonisation station (1),

- carrying out the chemical activation of the hydrochar obtained in the previous step, preferably in a milling station (6);
- introducing the chemically activated hydrochar formed (7) into a second reactor (9) made of refractory material, said second reactor (9) being part of a pyrolysis station (8),
- performing pyrolysis on the second reactor (9) until obtaining the end product (11) formed; preferably wherein the pyrolysis if carried out by a second heat transfer element (10) that is part of the pyrolysis station (8), and
- removing the end product (11) from the pyrolysis station (8) and preferably filtering and washing (F12) the end-product (11) with preferably about 1 M HCl for at least 1 hour, said step of filtering and washing (F12) preferably being performed with water until achieving a neutral pH value.

In a preferred embodiment of the first aspect of the invention, the method further comprises a step of grinding (F9) a quantity of biomass residues (32), prior to the step of introducing (F1) the hydrochar feedstock mixture (3) in the first reactor (2), in a prior grinding station (15).

In another preferred embodiment of the first aspect of the invention, optionally in combination with any previous or subsequent embodiment of the first aspect of the invention, the method further comprises a step of filtering and washing (F10) the hydrochar, after the hydrothermal carbonisation (F2) step on the hydrochar feedstock mixture (3).

In another preferred embodiment of the first aspect of the invention, optionally in combination with any previous or subsequent embodiment of the first aspect of the invention, the method further comprises a step of drying (F11) the hydrochar (5) at about 105°C between 1-24 hours prior to carrying out the chemical activation of the hydrochar.

In another preferred embodiment of the first aspect of the invention, optionally in combination with any previous or subsequent embodiment of the first aspect of the invention, the hydrothermal carbonisation of the hydrochar feedstock mixture is carried out for a time of at least 5 min at a temperature of 180-260°C to produce the hydrochar (5).

In another preferred embodiment of the first aspect of the invention, optionally in combination **with any** previous or subsequent embodiment of the first aspect of the invention, the hydrothermal carbonisation of the hydrochar feedstock mixture is carried out for a time of at least 5 min at a temperature of 180-260°C to produce the hydrochar (5), and the first heat transfer element (4) is a first furnace (1) that kinematically heats by electromagnetic waves, with a first cavity (13) that emits microwaves.

In another preferred embodiment of the first aspect of the invention, optionally in combination with any previous or subsequent embodiment of the first aspect of the invention, the second heat transfer element (10) is a second furnace (8) that kinematically heats by electromagnetic waves, with a second cavity (31), with a heating ramp of at least 5°C/min.

In another preferred embodiment of the first aspect of the invention, optionally in combination with any previous or subsequent embodiment of the first aspect of the invention, the pyrolysis step is carried out under a constant flow of inert gases of at least 150 cm³/min; to create an inert atmosphere inside the second reactor (9), until achieving temperatures of at least 800°C for a period of at least 5 minutes.

In another preferred embodiment of the first aspect of the invention, optionally in combination with any previous or subsequent embodiment of the first aspect of the invention, the method further comprises a step of lyophilising (F13) or a step of decanting (F14) the hydrochar (5) obtained from the step of performing hydrothermal carbonisation (F2), the respective steps being intended to separate the moisture from said hydrochar (5) prior to the activation step.

A second aspect of the invention refers to an installation in which the process according to any of the preceding embodiments of the first aspect of the invention is carried out, characterised by comprising:
- a hydrothermal carbonisation station (1) comprising:
   o a first reactor (2) made of advanced plastic material, said material being PEEK and/or PTFE intended for receiving a hydrochar feedstock mixture (3), and
   o a first heat transfer element (4) surrounding the first reactor (2) and being intended for kinetically heating by electromagnetic waves the hydrochar feedstock mixture (3) housed inside the first reactor (13) and obtaining hydrochar (5);
- a milling station (6) connected to the first reactor (2) and comprising:
   o a milling space (15) having a circular or polygonal geometry intended for receiving the hydrochar (5) and chemical agents, and
   ∘ at least one milling element (15) prolonging transversely from the milling space (14) intended for mixing the hydrochar (5) and chemical agents;
- a pyrolysis station (8) connected to the milling station (6) and comprising:
   ∘ a second reactor (9) made of an advanced material, said material being a refractory material intended for receiving the mixture obtained in the milling station (6), and
   ∘ a second heat transfer element (10) surrounding the second reactor (9) and being intended for heating the second reactor (9) and, accordingly, the mixture obtained from the milling station (6) until obtaining an end product (11).

In a preferred embodiment of the second aspect of the invention, optionally in combination with any previous or subsequent embodiment of the second aspect of the invention, the installation further comprises a grinding station (15) connected to the hydrothermal carbonisation station (1) by connection elements, said grinding station (15) being intended for grinding the biomass residues.

In a preferred embodiment of the second aspect of the invention, optionally in combination with any previous or subsequent embodiment of the second aspect of the invention, the installation further comprises a drying station (18) connected to the hydrothermal carbonisation station (1) through connection means and being intended for drying the hydrochar (5) produced in said carbonisation station (1).

In a preferred embodiment of the second aspect of the invention, optionally in combination with any previous or subsequent embodiment of the second aspect of the invention, the first reactor (2) has a longitudinal configuration and further comprises at least a first reaction chamber (19), a first end (20), a second end (21), a first biomass residue inlet (22) located at the first end (20), a first outlet (21) of hydrochar (5) located at the second end (21), a solvent inlet (23) communicated with the reaction chamber (19), a steam circuit inlet (24) communicated with the first reaction chamber (19), and a pressure relief valve (25) connected to the first reaction chamber (19) intended for levelling off the pressure inside the first reactor (2); and/or, furthermore, the second reactor (8) has a longitudinal configuration and further comprises at least a second reaction chamber (26), a third end (27), a fourth end (28), a second inlet (29) located at the third end (27), a second outlet (30) located at the fourth end (28) and an inert gas inlet (30) communicated with the second reaction chamber (26) intended for directing inert gases to said second reaction chamber (26) and causing the atmosphere to be inert.

In a preferred embodiment of the second aspect of the invention, optionally in combination with any previous or subsequent embodiment of the second aspect of the invention, the installation further comprises the first heat transfer element (4) and/or the second heat transfer element (10) are electromagnetic wave convection/induction furnaces and/or electric furnaces.

Therefore, with respect to the installation for using the process carried out, said installation preferably comprises a hydrothermal carbonisation (HTC) station intended for obtaining an intermediate product referred to as hydrochar from biomass residues of any suitable origin, being preferably connected to a drying station and to a milling station, said milling station being intended for activating the hydrochar. The milling station, in turn, is connected to a pyrolysis station intended for receiving the mixture coming from the milling station and for obtaining the end-product, said end product being the advanced carbonaceous material of the present invention.

Thus, the hydrothermal carbonisation (HTC) station comprises at least a first HTC reactor, intended for receiving a quantity of hydrochar feedstock mixture. Furthermore, it preferably comprises a set of pressure control elements intended for controlling the internal pressure of the first reactor by means of a steam circuit in the event of a drop in pressure, or a pressure relief valve in the event of a rise in pressure, for adjustment of the HTC process and comprehensive temperature control by means of a system of thermocouples, fiber optic and/or infrared.

The reactors of the invention are preferably manufactured from advanced plastic material, said material being PEEK, a thermoplastic polymer with a high mechanical, thermal and chemical stability; and/or said material being PTFE, better known as teflon, and it can be combined with the PEEK material, both being capable of withstanding pressures and temperatures that allow the hydrothermal carbonisation process to be carried out, the heat being transmitted to the components that react inside the same uniformly and with a prolonged service life period, due to the fact that there are no metallic components in their manufacture.

Also, these reactors can be made of a refractory material, capable of withstanding the pressures and temperatures to which it is subjected during the HTC process.

Likewise, the reactor has a longitudinal configuration, comprising at least one reaction chamber, one residue inlet located at a first end of the reactor communicated with the reaction chamber, one product outlet at a second end of the reactor communicated with the reaction chamber; a solvent inlet communicated with the reaction chamber, said solvent being water, distilled water with salts or distilled water with dissolved acids between 10-20% w/w, such as NH₄Cl, citric acid and/or H₂SO₄ and an inlet of the steam circuit communicated with the reaction chamber and one or more pressure relief valves communicated with the reaction chamber.

The hydrothermal carbonisation (HTC) station, in turn, comprises a set of connections coupled to the inlet into the first reactor, intended for filling the reactor with water coming from a water pump or water tank.

Moreover, the hydrothermal carbonisation (HTC) station comprises a heat transfer element, said element being a furnace, including a chamber housing the reactor; and wave transmission plates facing the reactor, intended for kinematically heating the products housed inside the reactor.

The reaction chamber has a section that can be circular or prismatic, suited for the geometry required for the process to be performed at a uniform temperature and pressure during application.

The milling station comprises an internal space communicated with the hydrochar outlet of the drying furnace, and a ball mill, namely a planetary ball mill, intended for milling the intermediate product received with the chemical agents mentioned in the step of performing chemical activation. The planetary ball mills are mills achieving a powder that is finer than the ball mills standard, achieving a completely homogeneous mixture of the hydrochar with the chemical agents, K₂CO₃ and urea, prior to the step of pyrolysis.

Finally, the installation also comprises a pyrolysis station made up of another reactor and another heat transfer element. The reactor of the pyrolysis station is made of an advanced material, said material being a refractory material, with or without a quartz chamber to ensure the tightness of the pyrolysis process, similar to the first reactor that is part of the hydrothermal carbonisation station. Likewise, this reactor, the reactor of the pyrolysis station, has inlets or communications into its internal inert gas chamber, intended for creating an inert atmosphere inside the same.

All the stations that make up the installation can be interconnected to one another by means of automatic conveyor belts that move the products made in each step automatically by means of electrification thereof or by means of vibrating conduits or other conveyor and/or storage elements (such as storage hoppers) between stations, including the connections between the elements that make up each of them.

A third aspect of the invention refers to an advanced carbonaceous material obtained or obtainable by means of the method of the first aspect of the invention, wherein the advanced carbonaceous material is characterized by a remarkable high specific surface area of at least 2,500 m²/g, with hierarchical pore structures including a variable content of micro- and mesopores. The materials exhibited micropore specific surface area values of at least 1,000 m²/g. Average pore size range between 2 and 4 nm, nitrogen content varies between 0.5 and 4 wt% and the oxygen content between 4 and 7% by weight depending on the process parameters. Additionally, superior CO₂ adsorption capacities measured at 298 K between 3 and 4.70 mmol/g.

Finally, a fourth aspect of the invention refers to the use of advanced carbonaceous material of the third aspect of the invention for electrochemical energy storage, particularly for batteries and/or supercapacitors, as well as for the adsorption of gases such as H₂ or CO₂, and/or the remediation of waters and soil.

It is finally noted that the carbonaceous material obtained by the method described in the first aspect of the invention can be tailored to meet the specific requirements of various industrial sectors. This customization can be achieved by adjusting its physicochemical, textural, and structural properties, including:
- Specific surface area
- Hierarchical pore structures with variable proportions of micropores and mesopores
- Average pore size range
- Nitrogen and oxygen content

These characteristics can be fine-tuned by modifying the process parameters. Additionally, by adjusting its physicochemical, textural, and structural properties, the material can demonstrate superior CO₂ adsorption capacities when measured at 298 K.

### BRIEF DESCRIPTION OF THE DRAWINGS

To complete the description that is being given and for the purpose of helping to better understand the features of the invention, attached hereto as an integral part of said description is a set of drawings which depict the following in an illustrative and non-limiting manner:
Figure 1 shows a diagram of steps of the method for obtaining advanced carbonaceous materials.
Figure 2 shows a scheme of the installation through which the process of obtaining advanced carbonaceous materials is carried out.
Figure 3 shows a set of SEM images, showing the microstructure of a type of advanced carbonaceous material characterised by preserving the morphology and microstructure of the starting biomass, showing in (a) particles made up of stacked layers, and characterised by rough surfaces and a high porosity in the form of channels, (b) also preserves the microspheres formed during the pretreatment of HTC along the surface and (c) a number of mesopores (<4 nm) arranged in an orderly manner along the entire surface.
Figure 4 shows (a) the N₂ adsorption/desorption curve, and (b) the CO₂ adsorption curve at 273K of the carbon material obtained in the preferred embodiment of the invention.
Figure 5 shows (a) a Van Krevelen diagram showing the effect of the HTC parameters evaluated in the H/C and O/C ratios, and (b) FTIR spectra of the products obtained.
Figure 6 shows a table with the characteristics of the resulting advanced carbonaceous product object of invention.

### DETAILED DESCRIPTION OF THE INVENTION

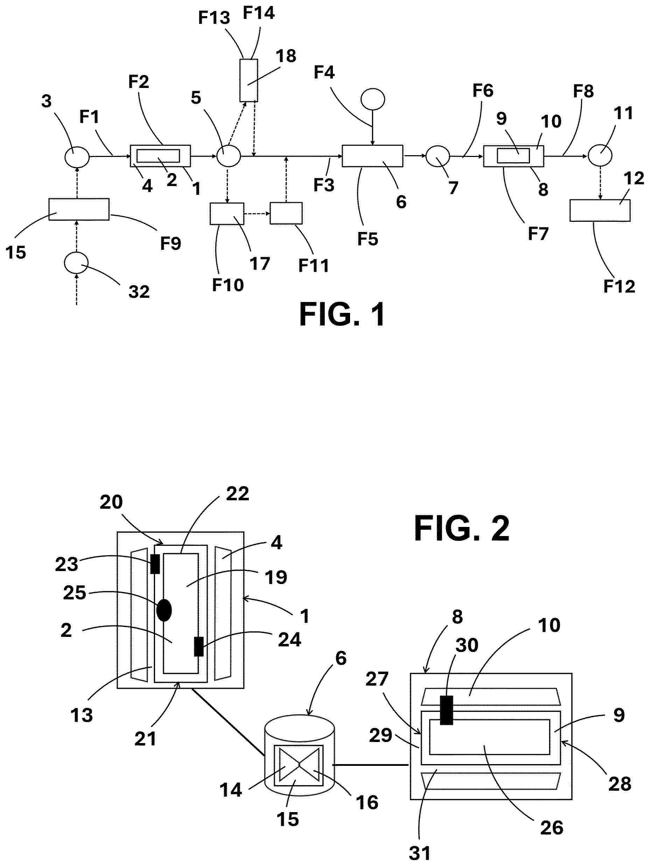

Figure 1 shows the method for obtaining advanced carbonaceous materials by means of kinetic heating, characterised in that it comprises the steps of introducing (F1) in a first reactor (2) made of advanced plastic material, in particular made of PEEK and/or PTFE, wherein the first reactor (2) is part of a hydrothermal carbonisation station (1), a hydrochar feedstock mixture (3) made up of a specific quantity of biomass residue of agri-food origin and a specific quantity of water and/or solvent, performing hydrothermal carbonisation (F2) by means of kinetic heating of the first reactor (1) and, accordingly, the hydrochar feedstock mixture (3) by means of a first heat transfer element (4) that is part of the hydrothermal carbonisation station (1) until obtaining an intermediate product referred to as hydrochar (5).

After the step of performing hydrothermal carbonisation (F2) on the biomass residues, the steps of collecting and introducing (F3) the hydrochar (5) in a milling station (6) are carried out, introducing (F4) a quantity of chemical agents into the milling station (6) and mixing (F5) the hydrochar (5) and the quantity of chemical agents in the milling station (6).

Likewise, the step of introducing (F6) the mixture formed (7) into a second reactor (9) made of refractory material takes place, said second reactor (9) being part of a pyrolysis station (8), performing pyrolysis (F7) on the second reactor (9) and, accordingly, the mixture formed (7), by means of a second heat transfer element (10) that is part of the pyrolysis station (8) until obtaining an end product (11). Finally, the end product (11) is removed (F8) from the pyrolysis station (8).

In a complementary manner, the method may further comprise a step of grinding (F9) a quantity of biomass residues (32), prior to the step of introducing (F1) the biomass residues into the first reactor (2), in a prior grinding station (15).

Preferably, the first step of filtering and washing (F10) the hydrochar (5) takes place after the step of performing hydrothermal carbonisation (F2) on the biomass residues together with water and/or chemical agents, wherein it is possible to perform filtering and washing of the hydrochar (5) with water.

Prior to this step, it is possible to perform a step of drying (F11) the hydrochar (5) at 105°C between 1-24 hours, for the purpose of completely removing the moisture after the step of hydrothermal carbonisation (F2). Also, instead of the mentioned step, it is possible to perform a step of lyophilising (F13) or a step of decanting (F14) the hydrochar (5) obtained from the step of performing hydrothermal carbonisation (F2) on the biomass residue, the respective steps being intended to separate the moisture from said hydrochar (5) prior to the step of mixing (F5) with the chemical agents. In case of performing lyophilisation of the hydrochar (5), said lyophilisation will be performed in a lyophilisation station (5), coupled to the hydrothermal carbonisation station (2).

The process may also comprise a second step of filtering and washing (F12) the final advanced carbonaceous material (11) with 1 M HCl for at least 1 hour, said second step of filtering and washing (F12) being performed with water until achieving a neutral pH value.

In the described method, the first heat transfer element (4) is a first furnace (1) that kinematically heats by electromagnetic waves, with a first cavity (13) that emits microwaves for a time of at least 5 min at a temperature of 180-260°C.

Moreover, the second heat transfer element (10) is a second furnace (8) that kinematically heats by electromagnetic waves, with a second cavity (31), with a heating ramp of at least 5°C/min, which pyrolyses the mixture obtained after the step of mixing the intermediate product called hydrochar and the quantity of chemical agents in the milling station (6) for a period of at least 5 minutes.

Finally, the step of performing pyrolysis on the second reactor (9) and, accordingly, the mixture formed, by means of the second heat transfer element (10) that is part of the pyrolysis station (8) until obtaining a advanced carbonaceous end product (11), is performed under a constant flow of inert gases of at least 150 cm³/min, to create an inert atmosphere inside the second reactor (9), until achieving temperatures of at least 800°C.

Figure 2 shows an installation through which the described process is performed, which process first comprises a hydrothermal carbonisation station (1) formed by a first reactor (2) made of advanced plastic material, said material being PEEK and/or PTFE intended for receiving a hydrochar feedstock mixture (3) made up of a specific quantity of biomass residue of agri-food origin and a specific quantity of water and/or solvent, and a first heat transfer element (4) surrounding the first reactor (2) and being intended for kinematically heating the hydrochar feedstock mixture (3) housed inside the first reactor (13) and obtaining hydrochar (5).

The installation is further formed by a milling station (6) connected to the first reactor (2) and comprising: a milling space (14) having a circular or polygonal geometry intended for receiving the hydrochar (5) and a quantity of chemical agents, and at least one milling element (15) prolonging transversely from the milling space (14) intended for mixing the hydrochar (5) and the quantity of chemical agents.

The installation thereby comprises a pyrolysis station (8) connected to the milling station (6), formed by a second reactor (9) made of an advanced material, said material being a refractory material intended for receiving the mixture obtained in the milling station (6), and a second heat transfer element (10) surrounding the second reactor (9) and being intended for heating the second reactor (9) and, accordingly, the mixture obtained from the milling station (6) until obtaining an end product (11).

The installation may comprise a grinding station (17) connected to the hydrothermal carbonisation station (1), said grinding station (17) being intended for grinding the biomass residues of agri-food origin. Additionally, the installation is further formed by a drying station (18) connected to the hydrothermal carbonisation station (1) and being intended for drying the hydrochar (5) produced in said carbonisation station (1).

The first reactor (2) has a longitudinal configuration and is placed in a transverse position with respect to a horizontal plane, further comprising at least a first reaction chamber (19), a first end (20), a second end (21), a first biomass residue inlet (22) located at the first end (20), a first outlet (21) of hydrochar (5) located at the second end (21), a reaction chamber (23), a solvent inlet (23) communicated with the reaction chamber, a steam circuit inlet (24) communicated with the reaction chamber (22), and at least one pressure relief valve (25) connected to the reaction chamber (22) intended for levelling off the pressure inside the first reactor (2).

Furthermore, the hydrothermal carbonisation station (1) comprises one or more connections (25) coupled to the first end (19) of the first reactor (2) intended for filling said first reactor (2) with treated water.

Moreover, the second reactor (8) has a longitudinal configuration and further comprises at least a second reaction chamber (26), a third end (27), a fourth end (28), a second inlet (29) located at the third end (27), a second outlet (30) located at the fourth end (28), and an inert gas inlet (30) communicated with the second reaction chamber (26) intended for directing inert gases to said second reaction chamber (26) and causing the atmosphere to be inert.

Furthermore, the first heat transfer element (4) and/or the second heat transfer element (10) are preferably electromagnetic wave furnaces, although they can also be electric furnaces or gas furnaces, or optionally mixed furnaces by means of blending with hydrogen.

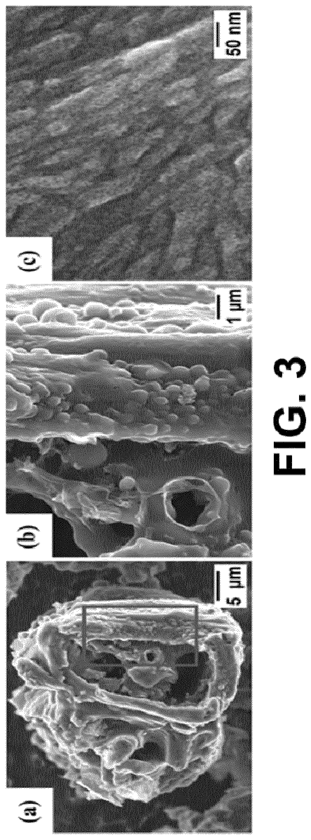

According to the method and associated installation, Figure 3 shows a novel material, said material being an advanced carbonaceous material comprising a specific surface area of at least 2,500 m²/g, with hierarchical pore structures including micro- and mesopores and micropore surface areas of at least 1,000 m²/g, intended for being used in various industrial sectors due to the textural properties it exhibits. Average pore size range between 2 and 4 nm, nitrogen content varies between 0.5 and 4 wt% and the oxygen content between 4 and 7% by weight depending on the process parameters. Additionally, superior CO₂ adsorption capacities measured at 298 K between 3 and 4.70 mmol/g.

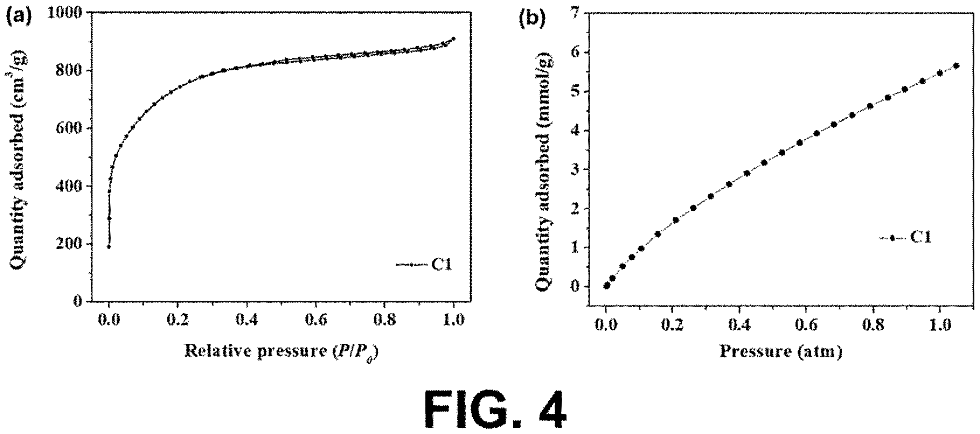

Figure 4 shows: (a) the N₂ adsorption/desorption curve, and (b) CO₂ adsorption curve at 273K of the carbon material obtained in the preferred embodiment of the invention.

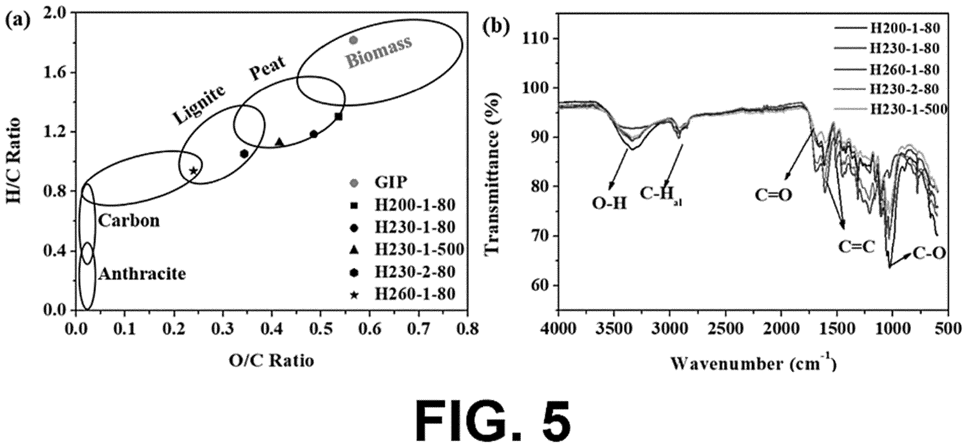

Figure 5 shows a Van Krevelen diagram showing the effect of the HTC parameters evaluated in the H/C and O/C ratios, in addition to the FTIR spectra of the products obtained.

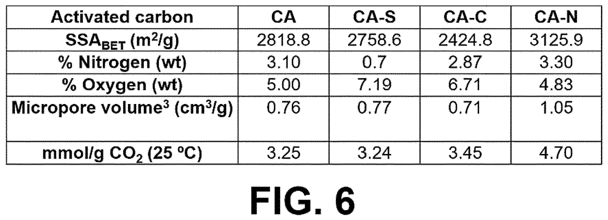

Finally, Figure 6 shows a table with the characteristics of the resulting advanced carbonaceous product object of invention.

## Claims

1. A method for obtaining carbonaceous materials, wherein the method comprises the steps of:
a. introducing in a first reactor (2) comprised in a hydrothermal carbonisation station (1), a hydrochar feedstock mixture (3); wherein the first reactor (2) is made of advanced plastic material, said material being either polytetrafluoroethylene (hereinafter, PTFE) reinforced with polyetheretherketone (hereinafter, PEEK),
b. carrying out a hydrothermal carbonisation of the hydrochar feedstock mixture (3) by kinetically heating the first reactor (2) until obtaining hydrochar (5); preferably wherein the kinetic heating of the first reactor (2) is carried out by means of a first heat transfer element (4) that is comprised in the hydrothermal carbonisation station (1),
c. carrying out the chemical activation of the hydrochar obtained in the previous step, preferably in a milling station (6),
d. introducing the activated hydrochar formed (7) into a second reactor (9) made of refractory material, said second reactor (9) being part of a pyrolysis station (8),
e. performing pyrolysis on the second reactor (9) until obtaining the end product (11) activated hydrochar formed (7); preferably wherein the pyrolysis if carried out by a second heat transfer element (10) that is part of the pyrolysis station (8), and
f. removing the end product (11) from the pyrolysis station (8) and preferably filtering and washing (F12) the end-product (11) with about 1 M HCl for at least 1 hour, said step of filtering and washing (F12) preferably being performed with water until achieving a neutral pH value.

2. The method according to claim 1, wherein the method further comprises a step of grinding (F9) a quantity of biomass residues (32) used for producing the hydrochar feedstock mixture (3), prior to step (a) of introducing the hydrochar feedstock mixture (3) in the first reactor (2), in a prior grinding station (15).

3. The method according to any one of claims 1 or 2, wherein the method further comprises a step of filtering and washing (F10) the hydrochar, after carrying out the hydrothermal carbonisation (F2) step (b) on the hydrochar feedstock mixture (3).

4. **The** method according to any one of the precedent claims, wherein the method further comprises a step of drying (F11) the hydrochar (5) at about 105°C between 1-24 hours prior to carrying out the chemical activation of the hydrochar (prior to step c).

5. **The** method according to any one of the precedent claims, wherein the hydrothermal carbonisation step (b) of the hydrochar feedstock mixture (3) is carried out for a time period of at least 5 min at a temperature of 180-260°C to produce the hydrochar (5).

6. **The** method according to any one of the precedent claims, wherein the hydrothermal carbonisation step (b) of the hydrochar feedstock mixture (3) is carried out for a time of at least 5 min at a temperature of 180-260°C to produce the hydrochar (5), and the first heat transfer element (4) is a first furnace (1) that kinematically heats by electromagnetic waves, with a first cavity (13) that emits microwaves.

7. **The** method according to any one of the precedent claims, wherein the second heat transfer element (10) is a second furnace (16) that kinematically heats by electromagnetic waves, with a second cavity (36), with a heating ramp of at least 5°C/min.

8. **The** method according to any one of the precedent claims, wherein the pyrolysis step (e) is carried out under a constant flow of inert gases of at least 150 cm³/min; to create an inert atmosphere inside the second reactor (9), until achieving temperatures of at least 800°C for a period of at least 5 minutes.

9. The method according to any one of the precedent claims, wherein the method further comprises a step of lyophilising (F13) or a step of decanting (F14) the hydrochar (5) obtained from the step of performing hydrothermal carbonisation (F2), the respective steps being intended to separate the moisture from said hydrochar (5) prior to the activation step.

10. An installation suitable for carrying out the process according to any of the preceding claims, **characterised by** comprising:
- a hydrothermal carbonisation station (1) comprising:
∘ a first reactor (2) made of advanced plastic material, said material being PEEK and/or PTFE intended for receiving a hydrochar feedstock mixture (3), and
o a first heat transfer element (4) surrounding the first reactor (2) and being intended for kinematically heating the hydrochar feedstock mixture (3) housed inside the first reactor (13) and obtaining hydrochar (5).
- a milling station (6) connected to the first reactor (2) and comprising:
o a milling space (14) having a circular or polygonal geometry intended for receiving the hydrochar (5) and chemical agents, and
o at least one milling element (15) prolonging transversely from the milling space (14) intended for mixing the hydrochar (5) and chemical agents.
- a pyrolysis station (8) connected to the milling station (6) and comprising:
o a second reactor (9) made of an advanced material, said material being a refractory material intended for receiving the mixture obtained in the milling station (6), and
o a second heat transfer element (10) surrounding the second reactor (9) and being intended for heating the second reactor (9) and, accordingly, the mixture obtained from the milling station (6) until obtaining an end product (11).

11. The installation according to claim 10, wherein the installation further comprises a grinding station (31) connected to the hydrothermal carbonisation station (1) by connection elements, said grinding station (31) being intended for grinding the biomass residues.

12. The installation according to claim 10 or 11, wherein the installation further comprises a drying station (18) connected to the hydrothermal carbonisation station (1) through connection means and being intended for drying the hydrochar (5) produced in said carbonisation station (1).

13. The installation according to any one of claims 10 to 12, wherein the first reactor (2) has a longitudinal configuration and further comprises at least a first reaction chamber (19), a first end (20), a second end (21), a first biomass residue inlet (22) located at the first end (20), a first outlet (21) of hydrochar (5) located at the second end (21), a solvent inlet (23) communicated with the reaction chamber, a steam circuit inlet (24) communicated with the first reaction chamber (19), and a pressure relief valve (25) connected to the first reaction chamber (19) intended for levelling off the pressure inside the first reactor (2); and/or, furthermore, the second reactor (8) has a longitudinal configuration and further comprises at least a second reaction chamber (26), a third end (27), a fourth end (28), a second inlet (29) located at the third end (27), a second outlet (30) located at the fourth end (28) and an inert gas inlet (30) communicated with the second reaction chamber (26) intended for directing inert gases to said second reaction chamber (26) and causing the atmosphere to be inert.

14. **The** installation according to any one of claims 10 to 13, wherein the installation further comprises the first heat transfer element (4) and/or the second heat transfer element (10) are electromagnetic wave conduction/induction furnaces and/or electric furnaces.

15. A carbonaceous material obtained or obtainable by means of the method of any one of claims 1 to 9, wherein the advanced carbonaceous material is **characterized by** a specific surface area of at least 2,500 m²/g, with hierarchical pore structures including micro- and mesopores. Micropore surface area values at least 1,000 m²/g. Average pore size range between 2 and 4 nm, nitrogen and oxygen content variable depending on the process parameters and superior CO₂ adsorption capacities, between 3 and 4.70 mmol/g measured at 298 K.
